# EUROPEAN PATENT APPLICATION

(11) **EP 4 706 846 A1**
(43) Date of publication of application: **11.03.2026**
(21) Application number: 25199501.5
(22) Date of filing: 02.09.2025
(51) Int. Cl.: B21D 51/26, B30B 1/26, H01M 10/04, H01M 50/107

(54) **AUTOMATIC SPINDLE ADJUSTMENT APPARATUS**

(30) Priority: 10.09.2024 KR 20240123419
(71) Applicant: Samsung SDI Co., Ltd., Yongin-si, Gyeonggi-do 17084 (KR); Intops Technic Co., Ltd., Gwangsan-gu, Gwangju 62464 (KR)
(72) Inventor: LEE, Jaeyoung, 17084 Yongin-Si, Gyeonggi-do (KR); SHIM, Kyung-Sub, 62464 Gwangsan-gu,Gwangju (KR)
(74) Representative: Gulde & Partner

(57) **Abstract**

An automatic spindle adjustment apparatus includes a base frame, a spindle adjuster on the base frame, the spindle adjuster being configured to adjust an upper spindle mover to set a moving range of an upper spindle corresponding to a target occlusal thickness of a battery cell, a vertical mover on the base frame, the vertical mover being configured to move the spindle adjuster in an up-and-down direction, and a horizontal mover on the vertical mover, the horizontal mover being coupled to the spindle adjuster and configured to move the spindle adjuster in a forward-backward direction.

## Description

### BACKGROUND

### 1. Field

The present disclosure relates to an automatic spindle adjustment apparatus.

### 2. Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

For example, the manufacturing process of the secondary battery may be performed by accommodating an electrode assembly and an electrolyte in a cylindrical case with one side open, placing a vent plate on a beading portion formed on one side of the case, and then crimping and pressing one end of the case.

The above information disclosed in this Background section is for enhancement of understanding of the background of the present disclosure, and therefore, it may contain information that does not constitute related (or prior) art.

### SUMMARY

According to one or more embodiments of the present disclosure, an automatic spindle adjustment apparatus may include a base frame, a spindle adjustment unit disposed on the base frame and configured to adjust an upper spindle moving unit to set a moving range of an upper spindle corresponding to a target occlusal thickness of a battery cell, a vertical moving unit provided on the base frame and configured to move the spindle adjustment unit in an up-and-down direction, and a horizontal moving unit provided on the vertical moving unit, coupled to the spindle adjustment unit, and configured to move the spindle adjustment unit in a forward-backward direction.

**In** some embodiments, the upper spindle moving unit may include a rotating shaft rotatably coupled to the upper spindle, a cam follower bearing eccentrically coupled to the rotating shaft and rotating together, and changing a height protruding outward from the upper spindle according to a rotation angle to change a moving range of the upper spindle, a rotating portion coupled to an end portion of the rotating shaft and rotating together, and having a first gear formed on an outer surface thereof, and including a slit penetrating by a predetermined length along a rotating trajectory, a driving gear rotatably coupled to the upper spindle and engaged with the first gear to rotate the rotating portion, and a locking unit inserted into the slit to be screw-coupled to the upper spindle, and restraining the rotating portion from rotating in a case of being rotated in a tightening direction, and releasing restraint of the rotating portion in a case of being rotated in a loosening direction.

In some embodiments, the spindle adjustment unit may rotate the locking unit to restrain or release the rotating portion, and may rotate the driving gear to change the moving range of the upper spindle.

In some embodiments, the spindle adjustment unit may include a wrench coupled to the driving gear or the locking unit and rotating the driving gear or the locking unit, and a driving unit coupled to the wrench and rotating the wrench.

In some embodiments, a rotation amount of the driving gear corresponding to the moving range of the upper spindle may be set, and the driving unit may rotate the wrench with the set rotation amount of the driving gear.

In some embodiments, a rotation amount of the locking unit for restraining or releasing the rotating portion may be set, and the driving unit may rotate the locking unit with the set rotation amount of the locking unit.

In some embodiments, the vertical moving unit may move the driving unit to a height at which the wrench may be coupled to the driving gear or the locking unit.

In some embodiments, a distance between the driving gear and the locking unit may be preset, and the vertical moving unit may move the driving unit so that the wrench may move between a height at which it may be coupled to the driving gear and a height at which it may be coupled to the locking unit.

In some embodiments, the horizontal moving unit may move the driving unit so that the wrench may be coupled to or decoupled from the driving gear or the locking unit.

In some embodiments, the horizontal moving unit may move the driving unit so that the wrench may be coupled to or decoupled from the driving gear in a case where the vertical moving unit may be operated and the wrench may be positioned at a height at which the wrench may be coupled to the driving gear.

In some embodiments, the horizontal moving unit may move the driving unit so that the wrench may be coupled to or decoupled from the locking unit in a case where the vertical moving unit may be operated and the wrench may be positioned at a height at which the wrench may be coupled to the locking unit.

In some embodiments, the automatic spindle adjustment apparatus may further include a control unit that may control the driving unit, the vertical moving unit, and the horizontal moving unit so as to release the restraint of the rotating portion by rotating the locking unit, may change the moving range of the upper spindle by rotating the driving gear, and restrain the rotating portion by rotating the locking unit.

In some embodiments, the control unit, in a case where the target occlusal thickness may be set, may set the moving range of the upper spindle corresponding to the set target occlusal thickness, may calculate a rotation amount of the driving gear corresponding to the set moving range of the upper spindle, and may control the driving unit to rotate the driving gear by the calculated rotation amount.

In some embodiments, the automatic spindle adjustment apparatus may further include a sensor that measures a height at which the cam follower bearing protrudes.

In some embodiments, the control unit may set a protruding height of the cam follower bearing corresponding to the set moving range of the upper spindle, and may receive protruding height data of the cam follower bearing from the sensor in real time, and may control the driving unit to protrude to the set protruding height of the cam follower bearing.

In some embodiments, the control unit may set a protruding height of the cam follower bearing corresponding to the set moving range of the upper spindle, and may receive protruding height data of the cam follower bearing from the sensor, and may calculate a difference value between the set protruding height and the received protruding height.

In some embodiments, the control unit may control the driving unit, the vertical moving unit, and the horizontal moving unit to change the moving range of the upper spindle in a case where the difference value may be greater than or equal to a certain value.

In some embodiments, the control unit, in a case where the difference value may be greater than or equal to a certain value, may calculate a rotation amount of the driving gear corresponding to the difference value and may control the driving unit to rotate the driving gear by the calculated rotation amount.

In some embodiments, the vertical moving unit may include a vertical moving unit body coupled to the base frame, a vertical moving plate slidably coupled to the vertical moving unit body, and a first actuator provided on the vertical moving unit body and moving the vertical moving plate.

In some embodiments, the horizontal moving unit may include a horizontal moving unit body coupled to the vertical moving plate, a horizontal moving plate slidably coupled to the horizontal moving unit body, a second actuator provided on the horizontal moving unit body and moving the horizontal moving plate, and a driving unit jig provided on the horizontal moving plate and to which the driving unit may be coupled.

### BRIEF DESCRIPTION OF DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings:
FIG. 1 illustrates a side view of an example of an automatic spindle adjustment apparatus according to some embodiments of the present disclosure.
FIG. 2 illustrates a rear view of an example of an automatic spindle adjustment apparatus according to some embodiments of the present disclosure.
FIG. 3 illustrates a perspective view of an example of a crimping and pressing machine to be adjusted by an automatic spindle adjustment apparatus according to some embodiments of the present disclosure.
FIG. 4 and FIG. 5 illustrate front views of an example of an upper spindle to be adjusted by an automatic spindle adjustment device according to some embodiments of the present disclosure.
FIG. 6 to FIG. 9 illustrate side views of an example in which an automatic spindle adjustment apparatus according to some embodiments of the present disclosure adjusts an upper spindle.
FIG. 10 illustrates a side view of an example in which a control unit and a sensor are further provided in the automatic spindle adjustment apparatus according to some embodiments of the present disclosure.

### DETAILED DESCRIPTION

Hereinafter, embodiments of the present disclosure will be described, in detail, with reference to the accompanying drawings. The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her invention in the best way.

The embodiments described in this specification and the configurations shown in the drawings are only some of the embodiments of the present disclosure and do not represent all of the scope, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

**In** the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of local Patent Law.

References to two compared elements, features, etc. as being "the same" may mean that they are "substantially the same". Thus, the phrase "substantially the same" may include a case having a deviation that is considered low in the art, for example, a deviation of 5% or less. **In** addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

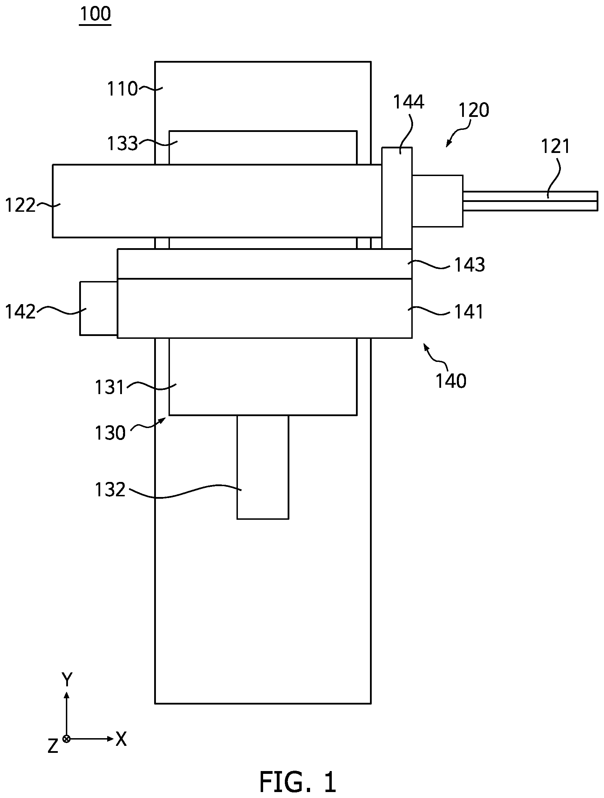

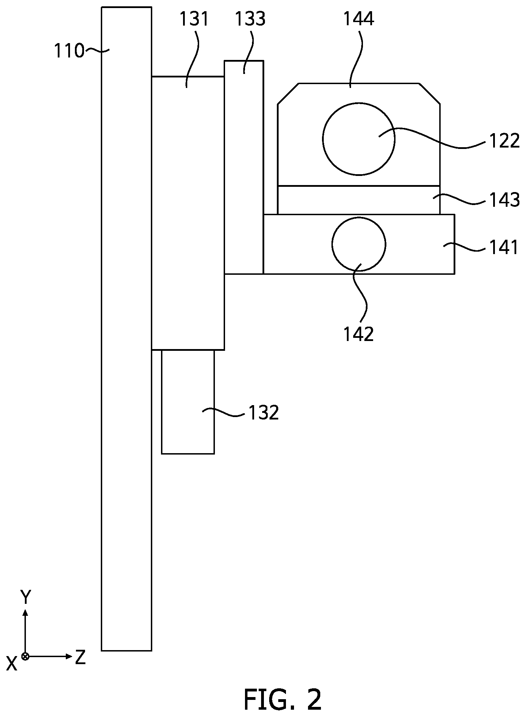

FIG. 1 illustrates a side view of an example of an automatic spindle adjustment apparatus according to some embodiments of the present disclosure, and FIG. 2 illustrates a rear view of an example of an automatic spindle adjustment apparatus according to some embodiments of the present disclosure. FIG. 2 illustrates a view when an observer looks at FIG. 1 from the left side toward the right side, with the horizontal direction of FIG. 2 extending into the page of FIG. 1.

Referring to FIG. 1 and FIG. 2, an automatic spindle adjustment apparatus 100 according to some embodiments of the present disclosure includes a base frame 110, a spindle adjustment unit 120 (e.g., a spindle adjuster) that is disposed on the base frame 110 and adjusts an upper spindle moving unit to set a movement range of an upper spindle corresponding to a target occlusal thickness of a battery cell, a vertical moving unit 130 (e.g., a vertical mover) that is provided on the base frame 110 and moves the spindle adjustment unit 120 in an up-and-down direction, and a horizontal moving unit 140 (e.g., a horizontal mover) that is provided on the vertical moving unit 130 and moves the spindle adjustment unit 120 in the forward-and-backward direction.

In some embodiments, the spindle adjustment unit 120 may include a wrench 121 that rotates the driving gear of the upper spindle moving unit described below, and a driving unit 122 (e.g., a driver) that is coupled to the wrench 121 and rotates the wrench 121. In some embodiments, the wrench 121 is configured as a hexagonal wrench, and a hexagonal groove is formed in the driving gear to which the wrench 121 is coupled, so that the wrench 121 may be coupled to the hexagonal groove of the driving gear to rotate the driving gear. However, the wrench 121 may be formed in any shape as long as it is coupled to the driving gear to rotate the driving gear.

The vertical moving unit 130 may be provided on the base frame 110 and may be configured to vertically move the spindle adjustment unit 120 in the height direction (e.g., along the Y-axis direction). In some embodiments, the vertical moving unit 130 may include a vertical moving unit body 131 coupled to the base frame 110, a vertical moving plate 133 slidably coupled to the vertical moving unit body 131, and a first actuator 132 provided on the vertical moving unit body 131 and moving the vertical moving plate 133. For example, referring to FIG. 2, the vertical moving unit body 131 may be between the base frame 110 and the vertical moving plate 133. A guide slit may be formed in the vertical moving unit body 131, and the vertical moving plate 133 may be configured to move linearly (e.g., and slidably) along the guide slit of the vertical moving unit body 131 (e.g., in the Y-axis direction). For example, referring to FIG. 2, the first actuator 132 may move the vertical moving unit body 131 (e.g., in the Y-axis direction), thereby moving the vertical moving plate 133 with the horizontal moving unit 140 and the driving unit 122 coupled thereto (e.g., in the Y-axis direction).

In some embodiments, the first actuator 132 may be provided as a linear actuator and configured to linearly move the vertical moving plate 133. In some embodiments, the first actuator 132 may be configured of a lead screw and a driving motor, and the lead screw may be screw-coupled to the vertical moving plate 133 to move the vertical moving plate 133 linearly in a case where the lead screw rotates. However, various known configurations may be applied as long as the vertical moving plate 133 may be linearly moved. In some embodiments, the vertical moving unit 130 may be configured as a motorized stage and configured to move in the vertical direction, that is, in the height direction.

The horizontal moving unit 140 may be provided on the vertical moving plate 133 and may be configured to move the spindle adjustment unit 120 horizontally in the forward and backward direction toward the driving gear (e.g., in the X-axis direction). In some embodiments, the horizontal moving unit 140 may include a horizontal moving body 141 coupled to the vertical moving plate 133, a horizontal moving plate 143 coupled to the horizontal moving body 141 so as to slide (e.g., in the X-axis direction), a second actuator 142 provided on the horizontal moving body 141 and moving the horizontal moving plate 143, and a driving unit jig 144 provided on the horizontal moving plate 143 and to which the driving unit 122 is coupled. For example, referring to FIGS. 1 and 2, the horizontal moving plate 143 may be between the horizontal moving body 141 and the driving unit jig 144. A guide slit may be formed in the horizontal moving body 141, and the horizontal moving plate 143 may be configured to move linearly along the guide slit. For example, referring to FIG. 1, the second actuator 142 may linearly move the horizontal moving plate 143 (e.g., in the X-axis direction), thereby moving the driving unit jig 144 with the driving unit 122 coupled thereto (e.g., in the X-axis direction).

In some embodiments, the second actuator 142 may be provided as a linear actuator and configured to linearly move the horizontal moving plate 143. In some embodiments, the second actuator 142 may be configured of a lead screw and a driving motor, and the lead screw may be screw-coupled to the horizontal moving plate 143 to move the horizontal moving plate 143 linearly in a case where the lead screw rotates. However, various known configurations may be applied as long as the horizontal moving plate 143 may be linearly moved. In some embodiments, the horizontal moving unit 140 may be configured as a motorized stage and configured to move in the horizontal direction, which is the forward-backward direction.

In other embodiments, the vertical moving unit 130 and the horizontal moving unit 140 may be configured as a motorized stage to simultaneously operate in the vertical direction, which is the height direction, and the horizontal direction, which is the forward-backward direction.

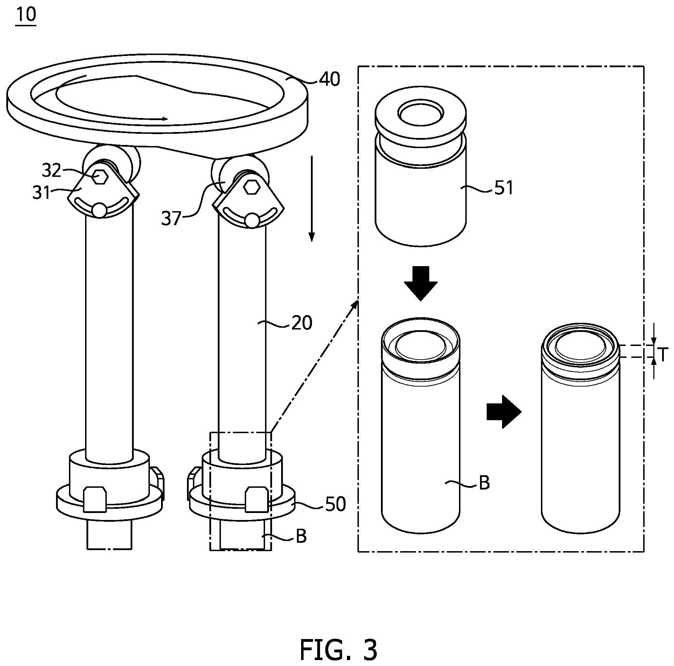

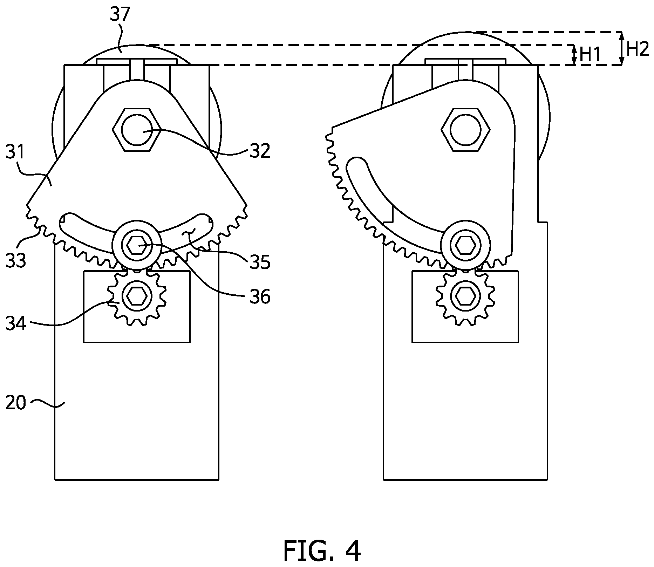

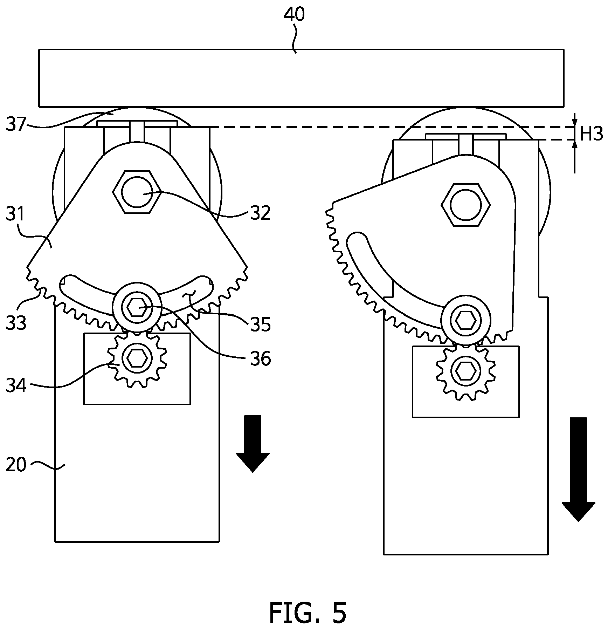

FIG. 3 illustrates a perspective view of an example of a crimping and pressing machine to be adjusted by an automatic spindle adjustment apparatus according to some embodiments of the present disclosure, and FIG. 4 and FIG. 5 illustrate front views of an example of an upper spindle to be adjusted by an automatic spindle adjustment device according to some embodiments of the present disclosure.

Referring to FIG. 3 to FIG. 5, the crimping and pressing machine 10 may include a pressing jig 51 configured to occlude the battery cell B disposed on the lower mold 50, an upper spindle 20 for pressing the pressing jig 51, a forming cam 40 for moving the upper spindle 20, and an upper spindle moving unit provided on the upper spindle 20 and configured to adjust the movement range of the upper spindle 20 by changing the distance between the upper spindle 20 and the forming cam 40.

For example, referring to FIG. 3, the process sequence using the crimping and pressing machine 10 may include the following: the battery cell B equipped with a vent plate on the beading portion of one open side may be placed on the lower mold 50; the forming cam 40 may rotate (e.g., circumferentially along the arow in FIG. 3), and the lower protruding portion of the forming cam 40 may press the upper spindle 20, causing the upper spindle 20 to move downward (e.g., in a direction oriented from the forming cam 40 toward the lower mold 50); the downward-moving upper spindle 20 may press the pressing jig 51; and the pressing jig 51 may press the open side end of the battery cell B to achieve occlusion. In this case, in a case where the moving range of the upper spindle 20 is changed, the pressure to press the pressing jig 51 is changed, so that the occlusion thickness T of the battery cell B may be different. The upper spindle moving unit may adjust the movement range of the upper spindle 20.

In some embodiments, referring to FIG. 4, the upper spindle moving unit (e.g., an upper spindle mover) may include a rotating shaft 32 that is rotatably coupled to the upper spindle 20, a cam follower bearing 37 that is eccentrically coupled to the rotating shaft 32 so as to rotate together and whose height protruding outward from the upper spindle 20 changes depending on the rotation angle to change the moving range of the upper spindle 20, a rotating portion 31 that is coupled to the end portion of the rotating shaft 32 so as to rotate together and has a first gear 33 formed on the outer surface thereof, and a driving gear 34 that is rotatably coupled to the upper spindle 20 and engaged with the first gear 33 to rotate the rotating portion 31. For example, the rotating portion 31 may be formed in a semicircular or arc shape, and the first gear 33 may be formed on an outer circumferential surface in a circumferential direction (e.g., the first gear 33 may be at an edge of the rotating portion 31 facing the driving gear 34 and opposite an end of the rotating portion 31 coupled to the rotating shaft 32).

With this configuration, in a case where the driving gear 34 rotates (e.g., around its central axis) to rotate the rotating portion 31 (e.g., since teeth of the driving gear 34 are engaged with teeth of the first gear 33 of the rotating portion 31), the rotating portion 31 rotates together with the rotating shaft 32, and the cam follower bearing 37 eccentrically coupled to the rotating shaft 32 rotates. In this case, as shown in FIG. 4, the height at which the cam follower bearing 37 protrudes outward from (e.g., above) the upper spindle 20 may vary depending on the rotation angle of the rotating portion 31. In some embodiments, the protruding height H1 of the cam follower bearing 37 may be the lowest height (e.g., relative to the top of the upper spindle 20) in a state in which the center of the rotating portion 31 is engaged with the driving gear 34 (left side of FIG. 4). In a case where the rotating portion 31 is rotated by the driving gear 34 and one end portion of the rotating portion 31 is engaged with the driving gear 34 (right side of FIG. 4), the protruding height H2 of the cam follower bearing 37 may be the maximum height (e.g., relative to the top of the upper spindle 20). Accordingly and advantageously, the protruding height of the cam follower bearing 37 may be conveniently adjusted by rotating the rotating portion 31 by the driving gear 34.

In a case where the protruding height of the cam follower bearing 37 is changed in the upper spindle 20, the moving range of the upper spindle 20 that is pressed by the forming cam 40 and moves in the height direction may be changed. As shown in FIG. 5, a height difference H3 of the cam follower bearing 37 may occur in a case where the center of the rotating portion 31 is engaged with the driving gear 34 and in a case where one end portion of the rotating portion 31 is engaged with the driving gear 34. The distance by which the upper spindle 20 moves downward may increase by the difference in protruding height H3 of the cam follower bearing 37.

In this way, by adjusting the rotation angle of the rotating portion 31 to adjust the protruding height of the cam follower bearing 37, the moving range of the upper spindle 20 may be changed, and the force with which the upper spindle 20 presses the pressing jig 51 may be changed, so that the occlusal thickness T of the battery cell B may be conveniently and reliably changed.

The upper spindle moving unit may further include a slit 35 extending by a predetermined length along the rotation trajectory in the rotating portion 31, and a locking unit 36 (e.g., a locker) inserted into the slit 35 and screw-coupled to the upper spindle 20 to lock or unlock the rotating portion 31. After rotating the rotating portion 31 through the driving gear 34, the rotating portion 31 may be restrained by the locking unit 36 so that the rotating portion 31 does not rotate. For example, in a case where the locking unit 36 rotates in the tightening direction, the rotating portion 31 may be restrained from rotating by being pressed against the upper spindle 20 by the locking unit 36. As another example, in a case where the locking unit 36 rotates in the loosening direction, the restraint of the rotating portion 31 is released, so that in a case where the driving gear 34 rotates, the rotating portion 31 may rotate.

Therefore, in a case of adjusting the protruding height of the cam follower bearing 37, the locking unit 36 is rotated in the loosening direction to release the rotation constraint of the rotating portion 31, and in a case where the adjustment of the protruding height of the cam follower bearing 37 is completed, the locking unit 36 is rotated in the tightening direction to restrict the rotation of the rotating portion 31, thereby advantageously preventing the protruding height of the cam follower bearing 37 from being arbitrarily changed.

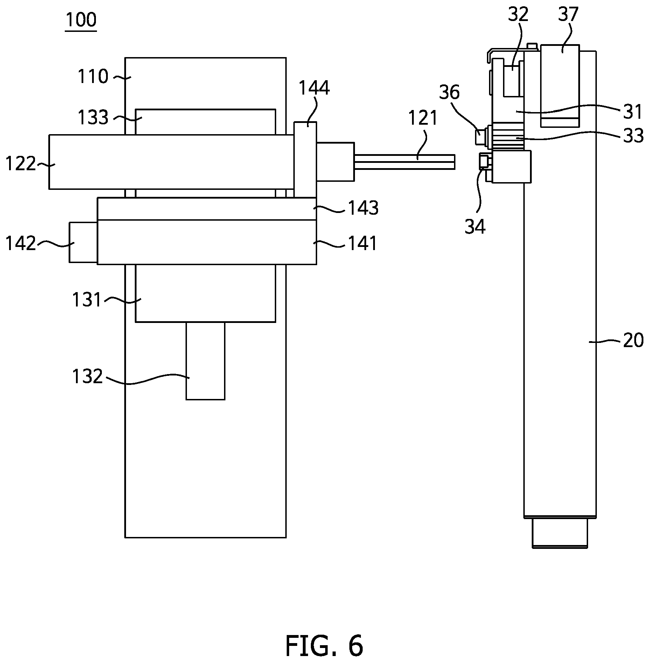

FIG. 6 to FIG. 9 illustrate side views of an example in which an automatic spindle adjustment apparatus according to some embodiments of the present disclosure adjusts an upper spindle.

Referring to FIG. 6 to FIG. 9, in the automatic spindle adjustment apparatus according to some embodiments of the present disclosure, the wrench 121 of the automatic spindle adjustment apparatus 100 (FIGS. 1-2) may be coupled to the driving gear 34 of the crimping and pressing machine 10 (FIG. 3) to rotate the driving gear 34 by a desired angle to change the moving range of the upper spindle 20 (e.g., via the rotating portion 31).

In some embodiments, in a case where it is necessary to change the moving range of the upper spindle 20, the first actuator 132 operates to move the driving unit 122 to a height at which the wrench 121 may be coupled to the locking unit 36, and the second actuator 142 operates to move the driving unit 122 so that the wrench 121 may be coupled to the locking unit 36.

In a case where the wrench 121 is coupled to the locking unit 36, the driving unit 122 operates to rotate the locking unit 36 to release the restriction of the rotating portion 31. Herein, the amount of rotation of the locking unit 36 for the locking unit 36 to release the rotating portion 31 is preset, and the driving unit 122 may release the rotating portion 31 by rotating the locking unit 36 at the set amount of rotation of the locking unit 36.

In a case where the restraint of the rotating portion 31 is released, the second actuator 142 operates to move the driving unit 122 so that the wrench 121 is spaced apart from the locking unit 36.

The first actuator 132 operates to move the driving unit 122 to a height at which the wrench 121 may be coupled to the driving gear 34, as shown in FIG. 6, and the second actuator 142 operates to move the driving unit 122 so that the wrench 121 is coupled to the driving gear 34. Herein, the distance between the driving gear 34 and the locking unit 36 is preset, and the first actuator 132 may operate to move the driving unit 122 to the preset height.

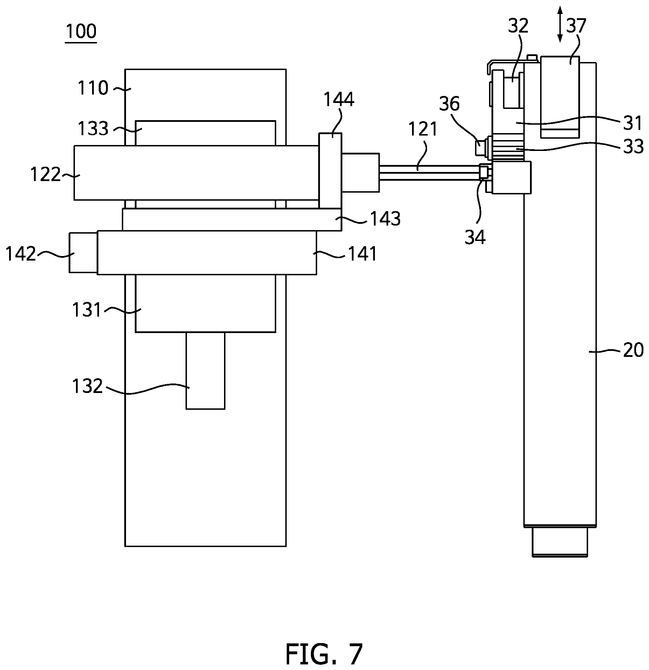

In a case where the wrench 121 is coupled to the driving gear 34, as shown in FIG. 7, the driving unit 122 operates to rotate the wrench 121 by the set rotation amount of the driving gear 34. Herein, the rotation amount of the driving gear 34 corresponding to the moving range of the upper spindle 20 is preset, and the driving unit 122 may rotate the wrench 121 with the set rotation amount of the driving gear 34.

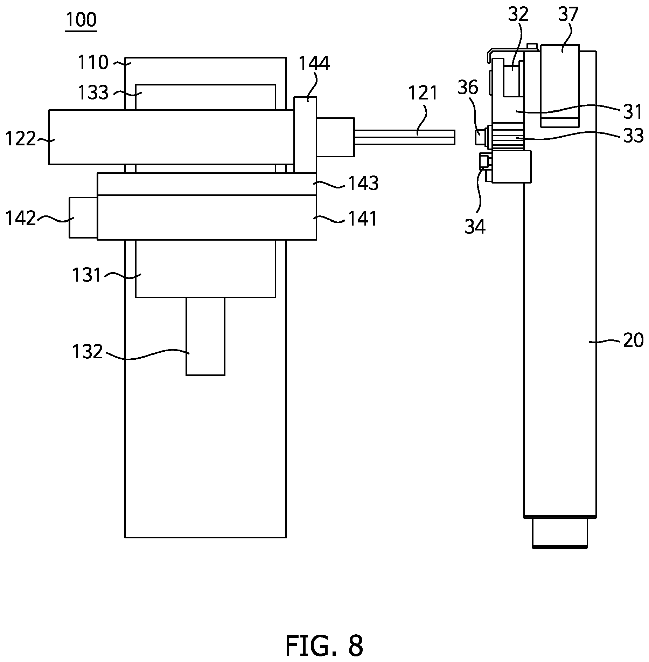

In a case where the rotation of the rotating portion 31 is completed, the second actuator 142 and the first actuator 132 sequentially operate to move the driving unit 122 to a height at which the wrench 121 is coupled to the locking unit 36, as shown in FIG. 8.

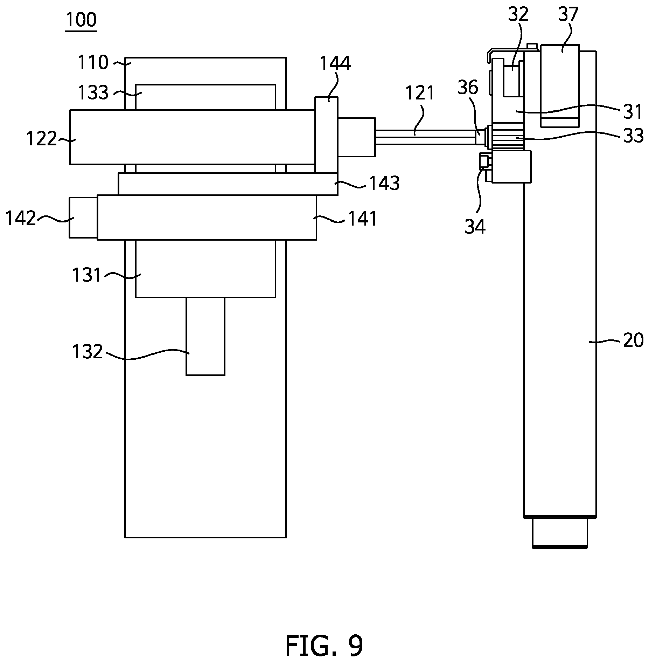

The second actuator 142 operates to move the driving unit 122 so that the wrench 121 is coupled to the locking unit 36, as shown in FIG. 9, and then the driving unit 122 operates to rotate the locking unit 36 to restrain the rotating portion 31. Herein, the rotation amount of the locking unit 36 for restraining the rotating portion 31 is preset, and the driving unit 122 may restrain the rotating portion 31 by rotating the locking unit 36 at the set rotation amount of the locking unit 36.

As described above, the automatic spindle adjustment apparatus according to some embodiments of the present disclosure may precisely adjust the wrench 121 through the operation of the driving unit 122 after setting the rotation amount of the driving gear 34 for changing the movement range of the upper spindle 20. In some embodiments, the position of the driving unit 122 may be automatically moved (e.g., movable) through the vertical moving unit 130 and the horizontal moving unit 140, so that the movement range of the upper spindle 20 may be changed more precisely and quickly.

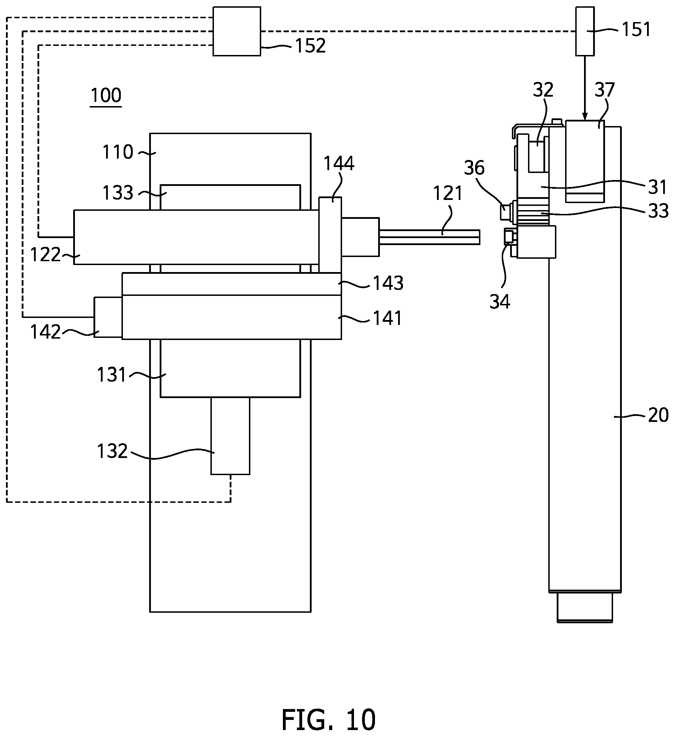

FIG. 10 illustrates a side view of an example in which a control unit and a sensor are further provided in the automatic spindle adjustment apparatus according to some embodiments of the present disclosure.

Referring to FIG. 10, the automatic spindle adjustment apparatus according to some embodiments of the present disclosure may further include a control unit 152 (e.g., a controller) for controlling the driving unit 122, the first actuator 132 of the vertical moving unit, and the second actuator 142 of the horizontal moving unit.

In some embodiments, in a case where the target occlusal thickness is set, the control unit 152 may calculate and set a movement range of the upper spindle 20 corresponding to the set target occlusal thickness. In some embodiments, the control unit 152 may calculate the rotation amount of the driving gear 34 corresponding to the set movement range of the upper spindle 20, and may control the driving unit 122 to rotate the driving gear 34 by the calculated rotation amount.

The rotation amount of the locking unit 36 for the locking unit 36 to restrain or release the rotating portion 31 may be preset in the control unit 152. In some embodiments, height data for moving between the driving gear 34 and the locking unit 36 may be preset in the control unit 152.

With this configuration, in a case where a change in the movement range of the upper spindle 20 is required, the control unit 152 may control the first actuator 132, the second actuator 142, and the driving unit 122 using preset data to rotate the locking unit 36 to release the restraint of the rotating portion 31, rotate the driving gear 34 to change the movement range of the upper spindle 20, and rotate the locking unit 36 to restrain the rotating portion 31.

The automatic spindle adjustment apparatus according to some embodiments of the present disclosure may further include a sensor 151 (e.g., on the top of the spindle bearing) for measuring the height at which the cam follower bearing 37 protrudes. In some embodiments, the sensor 151 may be a distance measuring sensor that measures a distance by irradiating a laser beam. However, various known measuring sensors may be applied as long as the height at which the cam follower bearing 37 protrudes may be measured.

The sensor 151 may measure the protruding height of the cam follower bearing 37 in real time, and the control unit 152 may receive the data measured by the sensor 151 in real time to control the protruding height of the cam follower bearing 37 to be maintained at a set height.

In some embodiments, the control unit 152 may preset the protruding height of the cam follower bearing 37 corresponding to the set movement range of the upper spindle 20, and receive the protruding height data of the cam follower bearing 37 in real time from the sensor 151. The control unit 152 may operate the driving unit 122 to allow the cam follower bearing 37 to protrude to the set height in a case where there is a difference between the received protruding height of the cam follower bearing 37 and the preset height.

In some embodiments, the height at which the cam follower bearing 37 protrudes is measured in real time through the sensor 151, and the control unit 152 may adjust the height of the cam follower bearing 37 to the preset height by operating the driving unit 122 based on height data received in real time.

In other embodiments, the control unit 152 may set the protruding height of the cam follower bearing 37 corresponding to the set movement range of the upper spindle 20, and receive the protruding height data of the cam follower bearing 37 from the sensor 151 to calculate a difference value between the set protruding height and the received protruding height.

In a case where the difference value between the set protruding height and the received protruding height is greater than or equal to a predetermined value, the control unit 152 may control the driving unit 122, the first actuator 132, and the second actuator 142 to change the moving range of the upper spindle 20. For example, an error range for the difference value between the set protruding height and the received protruding height is preset in the control unit 152, and in a case where the error range is exceeded, the control unit 152 may control to change the movement range of the upper spindle 20.

In a case where the difference value between the set protruding height and the received protruding height is equal to or greater than a certain value, the control unit 152 may calculate the rotation amount of the driving gear 34 corresponding to the difference value and control the driving unit to rotate the driving gear 34 by the calculated rotation amount.

As described above, the protruding height of the cam follower bearing 37 is measured through the sensor 151, and the control unit 152 calculates the rotation amount of the driving gear 34 based on the measured data, and then rotates the driving gear 34 by the calculated rotation amount, thereby advantageously changing the movement range of the upper spindle 20 more precisely and quickly.

The methods, processes, and/or operations described herein may be performed by code or instructions to be executed by a computer, processor, controller, or other signal processing device. The computer, processor, controller, or other signal processing device may be those described herein or one in addition to the elements described herein. The algorithms, code or instructions for implementing the operations of the method embodiments herein may transform the computer, processor, controller, or other signal processing device into a special-purpose processor for performing the methods herein.

Also, another embodiment may include a computer-readable medium, e.g., a non-transitory computer-readable medium, for storing the code or instructions described above. The computer-readable medium may be a volatile or non-volatile memory or other storage device, which may be removably or fixedly coupled to the computer, processor, or controller which is to execute the code or instructions for performing the method embodiments described herein.

By way of summation and review, the crimping and pressing processes, after placing a vent plate on a beading portion formed on one side of the case, are intended to prevent electrolyte leakage and air ingress, and the occlusal strength between the case and the vent plate is important. However, when an operator manually adjusts the occlusal strength between the case and the vent plate, occlusal errors may occur.

In contrast, the present disclosure provides an automatic spindle adjustment apparatus for adjusting the occlusal strength between the case and the vent plate. That is, according to some embodiments of the present disclosure, the occlusal strength (e.g., pressure) may be automatically and precisely adjusted (e.g., without a person directly adjusting the spindle), thereby eliminating occlusion errors and setting loss (e.g., caused by human adjustment and/or error), which in turn, reduces manufacturing time and manufacturing costs. Further, according to some embodiments of the present disclosure, the occlusal strength may be automatically and precisely adjusted, so the setting time can be reduced and precise mating thickness control within the error may be possible, thereby improving the quality of the secondary battery and productivity.

However, aspects and features of the present disclosure are not limited to those described above, and other aspects and features not mentioned will be clearly understood by a person skilled in the art from the detailed description, described above.

Although the present disclosure has been described with reference to embodiments and drawings illustrating aspects thereof, the present disclosure is not limited thereto. Various modifications and variations can be made by a person skilled in the art to which the present disclosure belongs within the scope of the present disclosure and the claims and their equivalents, below.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. An automatic spindle adjustment apparatus (100), comprising:
a base frame (110);
a spindle adjuster (120) on the base frame (110), the spindle adjuster (120) being configured to adjust an upper spindle (20) mover to set a moving range of an upper spindle (20) corresponding to a target occlusal thickness of a battery cell;
a vertical mover (130) on the base frame (110), the vertical mover (130) being configured to move the spindle adjuster (120) in an up-and-down direction; and
a horizontal mover (140) on the vertical mover (130), the horizontal mover (140) being coupled to the spindle adjuster (120) and configured to move the spindle adjuster (120) in a forward-backward direction.

2. The automatic spindle adjustment apparatus (100) as claimed in claim 1, wherein the upper spindle (20) mover includes:
a rotating shaft (32) rotatably coupled to the upper spindle (20);
a cam follower bearing (37) eccentrically coupled to the rotating shaft (32), the cam follower bearing (37) being configured to rotate together with the rotating shaft (32) and to change a height protruding outward from the upper spindle (20) according to a rotation angle to change a moving range of the upper spindle (20);
a rotating portion (31) coupled to an end portion of the rotating shaft (32), the rotating portion (31) being configured to rotate together with the rotating shaft (32), and the rotating portion (31) having a first gear (33) on an outer surface thereof and a slit (35) extending a predetermined length along a rotating trajectory;
a driving gear (34) rotatably coupled to the upper spindle (20) and engaged with the first gear (33) to rotate the rotating portion (31); and
a locker (36) movable in the slit (35) and screw-coupled to the upper spindle (20), the slit (35) being configured to restrain the rotating portion (31) from rotating when rotated in a tightening direction, and to release restraint of the rotating portion (31) when rotated in a loosening direction.

3. The automatic spindle adjustment apparatus (100) as claimed in claim 2, wherein the spindle adjuster (120) is configured to rotate the locker (36) to restrain or release the rotating portion (31), the spindle adjuster (120) being configured to rotate the driving gear (34) to change the moving range of the upper spindle (20).

4. The automatic spindle adjustment apparatus (100) as claimed in claim 3, wherein the spindle adjuster (120) includes:
a wrench (121) coupled to the driving gear (34) or the locker (36), the wrench (121) being configured to rotate the driving gear (34) or the locker (36); and
a driver (122) coupled to the wrench (121) and configured to rotate the wrench (121).

5. The automatic spindle adjustment apparatus (100) as claimed in claim 4, wherein:
a rotation amount of the driving gear (34) corresponding to the moving range of the upper spindle (20) is set, and
the driver (122) is configured to rotate the wrench (121) with the rotation amount of the driving gear (34).

6. The automatic spindle adjustment apparatus (100) as claimed in claim 4, wherein:
a rotation amount of the locker (36) for restraining or releasing the rotating portion (31) is set, and
the driver (122) is configured to rotate the locker (36) with the rotation amount of the locker (36).

7. The automatic spindle adjustment apparatus (100) as claimed in claims 4 to 6, wherein the vertical mover (130) is configured to move the driver (122) to a height at which the wrench (121) is coupled to the driving gear (34) or the locker (36).

8. The automatic spindle adjustment apparatus (100) as claimed in claims 4 to 7, wherein:
a distance between the driving gear (34) and the locker (36) is preset, and
the vertical mover (130) is configured to move the driver (122) so that the wrench (121) is movable between a height at which it is coupled to the driving gear (34) and a height at which it is coupled to the locker (36).

9. The automatic spindle adjustment apparatus (100) as claimed in claims 4 to 8, wherein the horizontal mover (140) is configured to move the driver (122) so that the wrench (121) is coupled to or decoupled from the driving gear (34) or the locker (36).

10. The automatic spindle adjustment apparatus (100) as claimed in claims 4 to 9, wherein the horizontal mover (140) is configured to move the driver (122) so that the wrench (121) is coupled to or decoupled from the driving gear (34) when the vertical mover (130) is operated and the wrench (121) is positioned at a height at which the wrench (121) is coupled to the driving gear (34), and to move the driver (122) so that the wrench (121) is coupled to or decoupled from the locker (36) when the vertical mover (130) is operated and the wrench (121) is positioned at a height at which the wrench (121) is coupled to the locker(36).

11. The automatic spindle adjustment apparatus (100) as claimed in claims 4 to 10, further comprising a controller (152) configured to control the driver (122), the vertical mover (130), and the horizontal mover (140) to release the restraint of the rotating portion (31) by rotating the locker (36), to change the moving range of the upper spindle (20) by rotating the driving gear (34), and to restrain the rotating portion (31) by rotating the locker (36).

12. The automatic spindle adjustment apparatus (100) as claimed in claim 11, wherein the controller (152), when the target occlusal thickness is set, is configured to set the moving range of the upper spindle (20) corresponding to the set target occlusal thickness, to calculate a rotation amount of the driving gear (34) corresponding to the set moving range of the upper spindle (20), and to control the driver (122) to rotate the driving gear (34) by the rotation amount.

13. The automatic spindle adjustment apparatus (100) as claimed in claim 11 or 12, further comprising a sensor (151) configured to measure a height at which the cam follower bearing (37) protrudes.

14. The automatic spindle adjustment apparatus (100) as claimed in claim 13, wherein the controller (152) is configured to set a protruding height of the cam follower bearing (37) corresponding to the set moving range of the upper spindle (20), to receive protruding height data of the cam follower bearing (37) from the sensor (151) in real time, and to control the driver (122) to protrude to the protruding height of the cam follower bearing (37).

15. The automatic spindle adjustment apparatus (100) as claimed in claim 13 or 14, wherein the controller (152) is configured to set a protruding height of the cam follower bearing (37) corresponding to the set moving range of the upper spindle (20), to receive a protruding height data of the cam follower bearing (37) from the sensor (151), to calculate a difference value between the protruding height and the protruding height data, and to control the driver (122), the vertical mover (130), and the horizontal mover(140) to change the moving range of the upper spindle (20) when the difference value is greater than or equal to a certain value.
